(19) Europäisches Patentamt
European Patent Office
Office européen des brevets

(11) Publication number: 0 228 819 B1

# (12) EUROPEAN PATENT SPECIFICATION

(45) Date of publication of the patent specification: 03.01.90

(51) Int. Cl.⁴: B32B 27/32, B32B 27/36, C08L 23/10

(21) Application number: 86309315.9

(22) Date of filing: 28.11.86

(54) **Multiple layer films and packages made therefrom.**

(30) Priority: 29.11.85 US 802876

(43) Date of publication of application: 15.07.87 Bulletin 87/29

(45) Publication of the grant of the patent: 03.01.90 Bulletin 90/1

(84) Designated Contracting States: AT BE CH DE ES FR GB GR IT LI LU NL SE

(56) References cited: DE-A- 1 629 791

(73) Proprietor: AMERICAN NATIONAL CAN COMPANY, 8101 West Higgins Road, Chicago Illinois 60631(US)
Proprietor: KENDALL McGAW LABORATORIES, INC., 2525 McGaw Avenue, Irvine California 92714(US)

(72) Inventor: Raniere, Jean Elisabeth, 124 Eighth Street, 11 Huntington Beach California 92648(US)
Inventor: Smith, Steven Louis, 25501 Otay Circle, Mission Viejo California 92691(US)
Inventor: Gehrke, Russell Paul, 1349 Mulberry Lane, Neenah Wisconsin 54956(US)
Inventor: Johnson, Richard Eugene, Jr., 202 Royal Court., no. 6, Appleton Wisonsin 54915(US)

(74) Representative: Holdcroft, James Gerald, Dr. et al, Graham Watt & Co. Riverhead, Sevenoaks Kent TN13 2BN(GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 228 819 B1

ACTORUM AG

## Description

This invention pertains to packaging, particularly to packaging liquid in sealed flexible pouches, or bags, where excellent visibility of the contents is desired.

Further, the invention relates to multiple layer films and packages made therefrom.

A particular utility for such packaging is in the packaging of powders, liquids and solutions used for medical services. It is deemed important that the package, including any seals, be strong to prevent contamination, or loss of the contained product. The packaging material should have excellent clarity for observation of the product, and should provide resistance to transmission of moisture vapor. The packaging material should be highly flexible without susceptibility to cracking or stress cracking, and also should be resistant to abuse such as by abrasion, shock impact, or penetration. Finally, since some medical liquids and solutions are processed at high temperatures of up to 121°C (250°F), it is important that the packaging material be able to tolerate such processing temperature without being adversely affected.

Liquids and solutions for medical use have been packaged in glass bottles and in bags made from polyvinyl chloride with some degree of success. But these packages tend to be somewhat deficient, particularly in regard to abuse resistance, moisture transmission and flexibility. However, no better packaging material has been available, and so PVC and glass have continued to be used despite their deficiencies.

It is an object of this invention to provide an improved multiple layer film for use in packaging, especially liquids and solutions.

We have sought to provide such a film which is highly tolerant of high temperature processing and which shows excellent tolerance of abuse such as abrasion, shock or penetration.

We have also sought to provide improved packages, made from multiple layer films, wherein the packages are useful for packaging liquids and solutions which may require high temperature processing, and wherein the packages may be subject to abusive handling or other adverse handling effects.

Finally, we have sought to provide improved closed and sealed packages which have been subjected to high temperature processing at up to 121°C (250°F), for a period of at least 10 minutes, e.g. up to 30 minutes. These packages should not unacceptably be adversely affected by the processing and should retain excellent properties of clarity, flexibility, and integrity. As used herein, the term "package" refers to containers of all types, including pouches.

According to the present invention, there is provided a multiple layer film, comprising:

a) a first layer, which is selected from polyesters, copolyesters, polycarbonates and polyether block amide copolymers;

b) a second, sealant layer which comprises a blend of a propylene polymer and a styrene-ethylene/butylene-styrene block copolymer; and

c) a third adhesive layer positioned between the first and second layers, and adhered in face-to-face contact, to the first and second layers, the third adhesive layer being a stryrene-ethylene/butylene-styrene block copolymer or a carboxy modified polypropylene.

The invention also provides a package having a wall made from the multiple layer film defined in the last preceding paragraph.

Multiple layer films according to this invention have a first layer made of an abuse resistant material, preferably containing ester groups, such as polyesters [e.g., polyethylene terephthalate (PET) and polybutylene terephthalate (PBT)] and copolyesters [e.g., glycol modified polyethylene terephthalate (PETG) and PCCE 9967].

Herein, such ester containing materials are sometimes referred to as "EGM's". Alternatively, the material of the first layer may be a polycarbonate ("PC") or polyether block amide copolymer (PEBA). The sealant layer comprises a first component of a polypropylene and a second component of a styrene-ethylene/butylene-styrene block copolymer (SEBS). The third layer is an adhesive and is positioned between, and in face-to-face adherent contact with the first and second layers. Where the first layer is an EGM, the preferred adhesive is styrene-ethylene/butylene-styrene block copolymer. A carboxy modified olefin (e.g., where the olefin may be polypropylene), is a preferred alternative adhesive where the composition of the first layer is PEBA because the carboxy modified adhesive gives higher levels of adhesion than does SEBS. In preferred carboxy modified polypropylene adhesives, the carboxy modification is an organic anhydride.

In order to achieve the combination of properties of high temperature tolerance and abuse tolerance, the composition of the second, sealant layer is preferably a blend of 40% by weight to 90% by weight of the polypropylene and 60% by weight to 10% by weight of the styrene-ethylene/butylene-styrene copolymer.

The films according to the invention are readily useful for making packages and pouches, especially by employing heat seals in package formation and closure. For those packages having high fractions of polypropylene in the second layer, the packages are tolerant of high temperature processing, especially up to at least 121°C (250°F) for a period of up to at least 10 minutes, preferably at least 30 minutes.

Embodiments of the invention will now be explained in more detail, by way of example only, in the following description to be read in conjunction with the accompanying drawings, in which:

FIGURE 1 is a cross-section of a portion of a representative multiple layer film according to this invention;
FIGURE 2 is a pictorial view of an open package embodying this invention, which is formed from a multiple layer film according to this invention;
and
FIGURE 3 is a pictorial view of a closed and sealed package formed from a multiple layer film according to this invention.

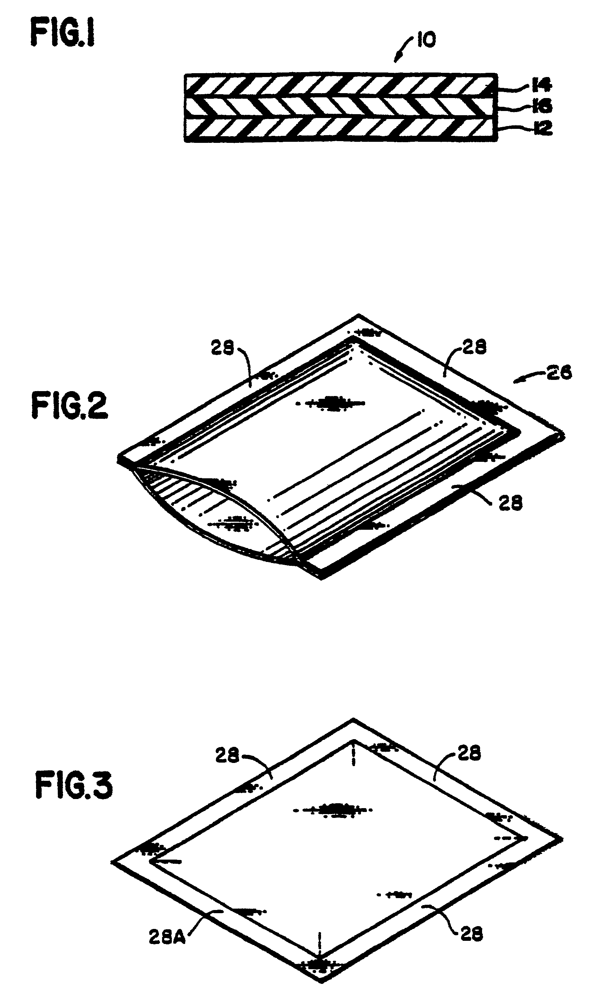

The details of the invention are most easily seen and understood in relation to the drawings. In FIGURE 1, the overall multiple layer film is designated at 10. The composition of layer 12 is a combination of polypropylene and SEBS. Layer 14 is an abuse resistant polymer composition. Layer 16 is an adhesive material capable of joining layers 12 and 14 with good adhesion.

FIGURE 2 shows a pouch-type package made from multiple layer film of the invention such as that seen in FIGURE 1. The package is made by first bringing portions of the film 10 into facing relationship, with their respective layers 12 facing each other. The enclosure is made by forming seals at 28 about the common periphery of the facing films, leaving one side open for access as seen in FIGURE 2. As shown, layers 12 form the inside surface of the package, and the layers 14 generally form the outside surface of the package.

The closed package of FIGURE 3 is representative of packages of the invention after the final seal 28A has been made.

Alternately, the sheet may be made into a tube by forming a longitudinal seal along overlapping edges, and a transverse seal is also formed across the width of the tube; all as described, for example, in US-A-4,521,437, herein incorporated by reference. This process is particularly suitable for use in vertical form, fill and seal machines.

The functioning of films and packages of the present invention is dependent on the ability of each layer to perform its functions, and the ability of the combined layers to act together. In preferred embodiments, layer 12 primarily serves the function of a heat seal layer. Again in preferred embodiments, the primary function of the layer 14 is to protect the package from external abuse at the package surface, such as by abrasion, cutting, or puncture. Finally, the primary function of layer 16 is to serve as an adhesive to join layers 12 and 14 to each other. The combined effect of the layers is a multiple layer film having strong resistance to external abuse, tolerance for high process temperatures, good unitary identity provided by good interlayer adhesion, and strong heat seals when formed into a package. Those embodiments having copolyester in the first layer, further, have improved clarity.

A preferred minimum thickness for layer 12, for achieving strong heat seals, is 0.025 mm (1 mil), so that is a preferred minimum thickness. Thicker heat seal layers usually provide more efficient use of the heat seal material, up to about 0.25 mm (10 mils) and that is a generally preferred maximum thickness. While layer 12 may be thicker, and same is encompassed by the scope of the invention, usually no material benefit is seen to be derived from extra thickness of this material, so the greater thicknesses are not generally preferred.

Polypropylene is advantageously used in layer 12 because of the combination of properties whereby it forms strong heat seals, contributes to impeding moisture vapor transmission and is tolerant of high temperatures to which a package may be subjected as in retort processing of up to at least about 121°C (250°F) for process times up to at least 30 minutes. While these properties of polypropylene are advantageous and favourable to its use, its brittleness is disadvantageous. This property is particularly of concern because the packages are subjected to high temperature processing, and packaging having polypropylene layers without SEBS blended therein exhibit increased brittleness after the high temperature processing. Moreover, because the polypropylene is present as such a significant proportion of the package composition, the brittleness of the polypropylene markedly tends to influence the overall brittleness of the package. The overall brittleness of a package is, of course, a property which is a composite of the brittlenesses of the individual layers, interfacial bond strengths, the elasticity of adjacent layers, and their capability to absorb and dissipate physical shock; and any overwhelming brittleness of any one layer. The composite brittleness of packages may generally be observed as the fraction of the filled and sealed packages which fail after being subjected to physical stress or shock.

In overcoming the problem of brittleness of the polypropylene in packages of the invention, a number of factors work together in combination. Important to achieving the objectives of the invention is the incorporation in the layer 12 of the elastomeric SEBS polymer.

Another factor in controlling the brittleness of layer 12, and thus, in large part, the brittleness of the package, is the selection of the particular polypropylene to be used in layer 12. While any of the polypropylenes may be used as the first component of the blend forming layer 12, polypropylenes which are copolymers having about 2 to about 8 mole percent ethylene are preferred. The copolymer, itself, provides some minimum level of additional resilience in the polypropylene, as compared to a homopolymer. The term "polypropylene" as used herein is intended to include homopolymers and copolymers except where specified otherwise. Whether the polypropylene is a homopolymer or a copolymer, its resilience, whether retort processed or not, is enhanced substantially by the incorporation of the SEBS component. Without the incorporation of the SEBS, the polypropylene homopolymer or copolymer is at least somewhat brittle, and is not as successfully functional as are films of the invention which have this copolymer in layer 12.

While the incorporation of virtually any amount of SEBS into the layer 12 composition will provide some benefit, generally, improvements in the functional performance of the 3-layer film are detected at a level of 2% by weight of the SEBS in the composition of layer 12. While up to 90% SEBS may be used in the composition of layer 12, the most desired balance of properties is achieved when the SEBS is present in this layer in an amount of 10% to 35%.

PEBA copolymers useful in layer 14 of this invention contain blocks of polyamide and polyether moieties in the polymer chain. A general formula for those polymers is:

$$HO-\left[\underset{\underset{O}{\|}}{C}-PA-\underset{\underset{O}{\|}}{C}-O-PE-O\right]_n-H$$

PA = polyamide
PE = polyether

The polyamide component may be any of the conventional polyamides, such as nylon 6, nylon 66, nylon 6/66, nylon 6/36, nylon 11, and nylon 12. The polyether component is usually, but not necessarily, selected from polyoxyethylene, polyoxypropylene, and polyoxytetramethylene. The melting point of known PEBA's is 120 to 206°C (248°F to 402°F), and the Shore Hardness is 25 D to 63 D. Preferred PEBA's are sold by Ato Chemie under the tradename PEBAX. Typical of At Chemie's polymer resins is PEBAX 4033 which has a melting point of 168°C (334°F) and Shore Hardness of 40D. Other known commercially available PEBA's are PEBAX 5512 and PEBAX 3533. PEBAX 5512 has a melting point of 195°C (383°F) and a Shore Hardness of 55D. PEBAX 3533 has a melting point of 152°C (306°F) and a Shore Hardness of 35D.

A selected PEBA should have a softening point temperature above the maximum temperature to which it will be exposed during its expected life. Thus, where the film will be subjected to retort processing, as at 121°C (250°F), the selected PEBA should have softening point temperature above this temperature.

As indicated above, a highly preferred composition for layer 14 is EGM, and especially a soft copolyester. Softer materials are preferred in layer 14 because films made with them are more flexible. A highly preferred, and softer, and especially clear, copolyester is available from Eastman Kodak Company, of Rochester, New York as Eastman PCCE 9967. Layer 14 can also contain PC. Eastman PCCE 9967 is a glycol modified cyclohexanedimethanolcyclohexanedicarboxylate.

By virtue of the interdependence of the several layers on each other for the overall functional performance of the multiple layer film, especially as regards shock abuse, for a given level of functional performance, selection of the specific materials for layer 14 is somewhat dependent on the composition of sealant layer 12. To the extent sealant layer 12 has a high level of resilience by use of polypropylene copolymer, rather than homopolymer, a harder, and thus tougher, material may be selected for layer 14. Where layer 12 has a lower level of resilience, the material chosen for the composition of layer 14 may be softer, thereby obtaining some added resilience for the multiple layer film, albeit at the cost of a possible reduction in abuse resistance for layer 14. Thus can the composition of layers 12 and 14 be adjusted somewhat to compensate one for properties of the other, while achieving the overall desired results for the film as a whole.

Typical of some of the materials used for adhesive layer 16 are the carboxy modified polymers sold by Norchem as Plexars, by DuPont as CXA's and by Mitsui Petrochemical as the Admer series. Where layer 12 has a high fraction of polypropylene, and layer 14 is PEBA, suitable materials for use in layer 16 are carboxy modified polypropylenes such as Admer QF-500, QF-550 and QF-551. Where layer 14 is an EGM, a particularly favourable material for use in layer 16 is an SEBS. Where adequate adhesion is achievable, SEBS is generally preferred over carboxy modified polymers because of its better acceptance by regulators of food and drug substances and packaging therefor. The selection of the adhesive polymer for layer 16 is limited only by the functional requirement that it have good adhesion, after retort, to layers 12 and 14 in the multiple layer film.

Overall, the thickness of the three layers of the films of the invention usually ranges from 0.038 to 0.50 mm (1.5 mils to 20 mils), with a preferred range of 0.15 to 0.30 mm (6 mils to 12 mils). At the lower limit of 0.038 mm (1.5 mils), layer 12 is at its usually minimally effective thickness of 0.025 mm (1 mil). Layer 14 is 0.01 mm (0.4 mil) which is its minimal effective thickness for providing abuse resistance. Layer 16 at 0.0025 mm (0.1 mil) is essentially just thick enough to form a continuous layer. While a film 0.038 mm (1.5

mils) thick is functional for applications requiring minimal abuse tolerance, higher levels of strength are usually preferred.

Toward the thicker end of the thickness range, films thicker than 0.50 mm (20 mils) tend to be less flexible due to the overall film thickness, and thus are not preferred.

Preferred films are therefore those having a thickness of 0.15 to 0.30 mm (6 to 12 mils), especially 0.20 mm (8 mils).

Within this preferred family of films, preferred ratios of the thicknesses of the layers to the overall thickness of the three layer composite are 60% to 85% layer 12, 5% to 30% layer 14 and 10% layer 16. A highly preferred film is 77% layer 12 as a blend of PPE and SEBS, 13% layer 14 as copolyester, and 10% layer 16 as SEBS.

The invention will be explained further by reference to the following non-limiting examples.

EXAMPLE 1

A composition is selected for layer 12 which is 80% polypropylene and 20% styrene ethylene butylene styrene copolymer. The composition selected for layer 14 is polyether block amide PEBAX 4033. The composition selected for layer 16 is Admer QF-550. Using these selected materials, a three layer film as in FIGURE 1 is coextruded using three extruders and a multiple layer combining slit die, to form a three layer film. The throughput at the die is so adjusted that the overall layer thickness ratios are 70% layer 12, 20% layer 14, and 10% layer 16. Overall thickness of the film is 0.25 mm (10 mils).

EXAMPLE 2

A three layer film is made as in EXAMPLE 1 except that Admer QF-551 is substituted for Admer QF-550.

EXAMPLE 3

A three layer film is made as EXAMPLE 2 except that the layer ratios are 80% layer 12, and 10% each for layers 14 and 16.

EXAMPLE 4

A three layer film is made as in EXAMPLE 2 except that the overall thickness of the film is 0.20 mm (8 mils) and the layer thickness ratios are 77.5% layer 12, 12.5% layer 14 and 10% layer 16.

EXAMPLE 5

A three layer film is made as in EXAMPLE 2 except that the overall thickness of the film is 0.20 mm (8 mils) and the layer thickness ratios are 65% layer 12, 25% layer 14 and 10% layer 16.

EXAMPLE 6

A three layer film is made as in EXAMPLE 1 except that PEBAX 5512 is used in place of PEBAX 4033.

EXAMPLE 7

A three layer film is made as in EXAMPLE 1 except that SEBS is used in layer 16 in place of Admer QF-550.

EXAMPLE 8

A three layer film is made as in EXAMPLE 1 except that glycol modified cyclohexanedimethanolcyclohexanedicarboxylate PCCE 9967 is used in layer 14 in place of PEBAX 4033 and SEBS is used in layer 16 in place of Admer QF-550, with the layer thickness ratios being 77.5% layer 12, 12.5% layer 14 and 10% layer 16. The overall thickness of the film was 0.20 mm (8 mils).

The films made according to EXAMPLES 1-8 were made into heat sealed pouches. The pouches all had good clarity, strength, abuse and shock tolerance, and tolerance of high temperature processing conditions at 121°C (250°F) for 30 minutes. The pouches of EXAMPLE 8, using PCCE 9967, had the best clarity.

It must be appreciated that additional layers may be added to the three layer films according to the invention, thereby to impart additional or improved functional properties to the films, or to adapt them to other uses. The invention is not limited to films having but three layers, therefore.

Thus, it will be seen that the invention provides multiple layer films and packages which have a combination of tolerance for significant shock abuse, as well as tolerance of high temperature processing.

The films and packages exhibit good heat seal capability and excellent clarity, as well as good barrier properties to transmission of moisture vapor. Further, the packages are excellent for containing liquid products which need protection from abuse and contamination by the outside environment and are especially suitable for containing medical solutions.

## Claims

1. A multiple layer film, comprising:
a) a first layer, which is selected from polyesters, copolyesters, polycarbonates and polyether block amide copolymers;
b) a second, sealant layer which comprises a blend of a propylene polymer and a styrene-ethylene/butylene-styrene block copolymer; and
c) a third adhesive layer positioned between the first and second layers, and adhered, in face-to-face contact, to the first and second layers the third adhesive layer being a styrene-ethylene/butylene-styrene block copolymer or a carboxy modified polypropylene.
2. A film according to claim 1, wherein the first layer is a polyester or copolyester polymer.
3. A film according to claim 1, wherein the first layer is a polyether block amide copolymer.
4. A film according to claim 1, wherein said first layer is a glycol modified cyclohexanedimethanolcyclohexanedicarboxylate.
5. A film according to any of claims 1 to 4, wherein the composition of the second, sealant layer comprises a blend of 40% by weight to 90% by weight of the said propylenepolymer and 60% by weight to 10% by weight of the said styrene-ethylene/butylene-styrene block copolymer.
6. A film according to any of claims 1 to 5, wherein the second sealant layer comprises a blend of 40% to 90% by weight of said propylenepolymer and 60% to 10% by weight of said styrene-ethylene/butylene-styrene block coppolymer.
7. A package made from a multiple layer film according to any of claims 1 to 6.
8. A package according to claim 7, which has been subjected to processing conditions involving a temperature of up to 121°C (250°F) for a period of at least 10 minutes.
9. A package according to claim 7 or claim 8, wherein said package is filled with and containes medical products including liquids and powders.

## Patentansprüche

1. Mehrschichtfilm, bestehend aus
a) einer ersten Schicht, die aus Polyestern, Copolyestern, Polycarbonaten und Polyetherblockamidcopolymeren ausgewählt ist,
b) einer zweiten, der Versiegelung dienenden Schicht, die eine Mischung aus einem Propylenpolymeren und einem Styrol-Ethylen/Butylen-Styrol-Blockcopolymeren umfaßt, und
c) einer dritten Schicht als Klebstoff, die zwischen der ersten und der zweiten Schicht angeordnet und in flächiger Berührung mit der ersten und der zweiten Schicht verklebt ist, wobei die Klebstoffschicht ein Styrol-Ethylen/Butylen-Styrol-Blockcopolymeres oder ein carboxymodifiziertes Polypropylen ist.
2. Film nach Anspruch 1, bei dem die erste Schicht ein Polyester- oder Copolyester-Polymeres ist.
3. Film nach Anspruch 1, bei dem die erste Schicht ein Polyetherblockamidcopolymeres ist.
4. Film nach Anspruch 1, bei dem die erste Schicht ein glykolmodifiziertes Cyclohexandimethanolcyclohexandicarboxylat ist.
5. Film nach einem der Ansprüche 1 bis 4, bei dem die Zusammensetzung der zweiten, der Versiegelung dienenden Schicht eine Mischung aus 40 Gew.% bis 90 Gew.% des Propylenpolymeren und 60 Gew.% bis 10 Gew.% des Styrol-Ethylen/Butylen-Styrol-Blockcopolymeren umfaßt.
6. Film nach einem der Ansprüche 1 bis 5, bei dem die zweite, der Versiegelung dienende Schicht eine Mischung von 40 Gew.% bis 90 Gew.% des Propylenpolymeren und 60 Gew.% bis 10 Gew.% des Styrol-Ethylen/Butylen-Styrol-Blockcopolymeren umfaßt.
7. Verpackung, hergestellt aus einem Mehrschichtfilm nach einem der Ansprüche 1 bis 6.
8. Verpackung nach Anspruch 7, die Behandlungsbedingungen bei einer Temperatur von bis zu 121°C (250°F) über einen Zeitraum von zumindest 10 Minuten ausgesetzt worden ist.
9. Verpackung nach Anspruch 7 oder Anspruch 8, wobei die Verpackung mit medizinischen Erzeugnissen einschl. Flüssigkeiten und Pulvern gefüllt ist und diese enthält.

## Revendications

1. Pellicule multicouche, caractérisée en ce qu'elle comprend:
a) une première couche choisie parmi les matériaux suivants: polyesters, copolyesters, polycarbonates et copolymères d'amides du bloc des polyéthers;
b) une seconde couche d'étanchéité qui comprend un mélange de polymères de propylène et un copolymère du bloc styrène-éthylène/butylène-styrène, et

c) une troisième couche adhésive placée entre les première et seconde couches, et qui adhère, en contact face-contre-face, aux première et seconde couches, cette troisième couche étant soit un polymère du bloc styrène-éthylène/butylène-styrène, soit un polypropylène carboxy-éthylène/butylène-styrène, soit un polypropylène du bloc carboxy-modifié.

2. Pellicule selon la Revendication 1, caractérisée en ce que la première couche est un polyester ou un polymère de copolyester.

3. Pellicule selon la Revendication 1, caractérisée en ce que la première couche est un copolymère amide du bloc des polyéthers.

4. Pellicule selon la Revendication 1, caractérisée en ce que la première couche est un cyclohexanediméthanolcyclohexanedicarboxylate modifié au glycol.

5. Pellicule selon l'une quelconque des Revendications 1 à 4, caractérisée en ce que la composition de la seconde couche d'étanchéité comprend un mélange de 40 à 90% en poids dudit polymère de propylène et de 60 à 10% en poids dudit copolymère du bloc styrène-éthylène/butylène-styrène.

6. Pellicule selon l'une quelconque des Revendications 1 à 5, caractérisée en ce que la seconde couche d'étanchéité comprend un mélange de 40 à 90% en poids dudit polymère et de 60 à 10% en poids dudit bloc de styrène-éthylène/butylène-styrène.

7. Emballage réalisé à partir de la pellicule à couches multiples selon l'une quelconque des Revendications 1 à 6.

8. Emballage selon la Revendication 7, caractérisé en ce qu'il a été soumis à des conditions de traitement qui consistent à l'exposer à une température atteignant 121°C pendant au moins 10 minutes.

9. Emballage selon l'une quelconque des Revendications 7 ou 8, caractérisé en ce qu'il est rempli de, et contient des, produits pharmaceutiques, y compris des produits liquides et des produits pulvérulents.

FIG.1

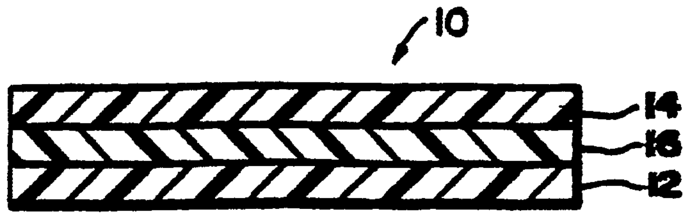


FIG.2

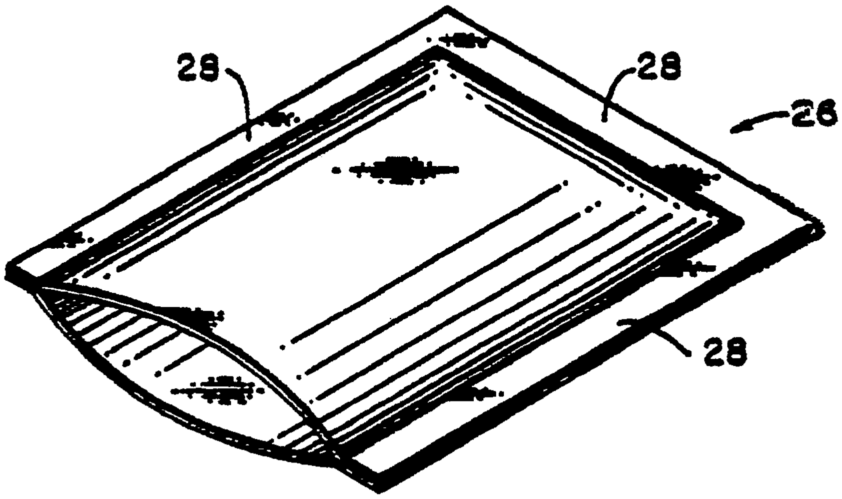


FIG.3